# EUROPÄISCHE PATENTSCHRIFT

(11) **EP 2 819 831 B1**
(45) Veröffentlichungstag und Bekanntmachung des Hinweises auf die Patenterteilung: **20.04.2016**
(21) Anmeldenummer: 13708764.9
(22) Anmeldetag: 28.02.2013
(51) Int. Cl.: B29C 51/30, B29C 33/30, B29C 65/00, B26D 7/26

(54) **VERPACKUNGSMASCHINE MIT EINEM AUSWECHSELBAREN WERKZEUG**
PACKING MACHINE WITH EXCHANGEABLE TOOL
MACHINE D'EMBALLAGE AVEC OUTIL REMPLAÇABLE

(30) Priorität: 29.02.2012 DE 102012003830
(43) Veröffentlichungstag der Anmeldung: 07.01.2015
(73) Patentinhaber: GEA Food Solutions Germany GmbH, 35216 Biedenkopf-Wallau (DE)
(72) Erfinder: RUNTE, Frank, 57334 Bad Laasphe (DE)
(74) Vertreter: Wolff, Felix
(86) Internationale Anmeldenummer: PCT/EP2013/054103
(87) Internationale Veröffentlichungsnummer: WO 2013/127963

(56) Entgegenhaltungen:
- EP-A1- 2 052 979
- WO-A1-2007/063741
- DE-A1- 10 359 478
- DE-A1-102010 009 536

## Beschreibung

Die vorliegende Erfindung betrifft eine Verpackungsmaschine mit einer Tiefziehstation und/oder einer Siegelstation und/oder einer Schneideinrichtung, wobei mindestens eine dieser Stationen oder die Schneideinrichtung einen Hubtisch mit einer Hubeinrichtung aufweisen.

Derartige Verpackungsmaschinen sind aus dem Stand der Technik bekannt, siehe z.B. DE 10359478, EP 2052979, DE 102010009536 und WO 2007063741, und werden meist als sogenannte "Form-Fill-Seal-Verpackungsmaschinen" (FFS-Verpackungsmaschinen) bezeichnet. Vorzugsweise handelt es sich um Tiefziehautomaten. Auf derartigen Verpackungsmaschinen werden eine Vielzahl von unterschiedlichen Verpackungen in unterschiedlichen Formaten hergestellt. Dafür müssen Werkzeuge, die teilweise ein erhebliches Gewicht aufweisen gewechselt werden, was bei Verpackungsmaschinen gemäß dem Stand der Technik in der Regel sehr aufwändig war.

Es besteht seit langem deshalb ein Bedarf, eine Verpackungsmaschine zur Verfügung zu stellen, bei der der Werkzeugwechsel schneller und/oder einfacher durchgeführt werden kann.

Gelöst wird die Aufgabe mit einer Verpackungsmaschine nach Anspruch 1.

Die vorliegende Erfindung betrifft eine Verpackungsmaschine zum Verpacken von einem Verpackungsgut in einer Kunststofffolie. Die Verpackung weist in der Regel eine tiefgezogene Verpackungsmulde auf, die mit dem Verpackungsgut befüllt und dann mit einem Deckel, insbesondere einer Deckelfolie verschlossen wird. Der Deckel wird in der Regel an die Verpackungsmulde gesiegelt. Vor dem Versiegeln kann in der Verpackungsmulde ein Gasaustausch vorgenommen werden. Die Deckelfolie kann ebenfalls tiefgezogen sein.

Meist werden die Verpackungsmulden in einer Tiefziehstation in eine ebene Folienbahn eingeformt. Diese Folienbahn wird entlang der Verpackungsmaschine, vorzugsweise taktweise, insbesondere mit Ketten, transportiert. Danach wird die Verpackungsmulde befüllt und anschließend in einer Siegelstation mit einer Deckelfolie verschlossen. Die so fertiggestellte Verpackung wird danach in einer Schneideinrichtung vereinzelt.

Erfindungsgemäß weist wenigstens eine Station ein Oberteil und ein Werkzeug auf, das an dem Oberteil befestigt ist. Das Werkzeug kann wahlweise gewechselt werden. Dafür muss das Werkzeug von dem Oberteil entfernt werden.

Erfindungsgemäß weisen nun entweder das Werkzeug oder das Oberteil eine Führung auf, entlang derer das Werkzeug zunächst im Wesentlichen horizontal in das Oberteil einführbar ist und die das Werkzeug anschließend anhebt. Dadurch kann das Werkzeug zunächst im Wesentlichen horizontal in das Oberteil eingeführt und im letzten Teil angehoben werden, wodurch der Abstand zwischen dem Oberteil und dem Werkzeug vermindert wird. Zum Demontieren wird das Werkzeug zunächst abgesenkt und dann im Wesentlichen horizontal aus dem Oberteil herausgezogen.

Vorzugsweise weist die Führung, beispielsweise eine Kulisse, eine erste Steigung und eine zweite Steigung und dazwischenliegend einen horizontalen Abschnitt auf. Das Werkzeug wird zunächst entlang des horizontalen Abschnitts in das Oberteil geschoben und sein vorderes und sein hinteres Ende dann von der ersten bzw. zweiten Steigung angehoben.

Weiterhin bevorzugt weist das Werkzeug mindestens ein erstes Roll- oder Gleitmittel und mindestens ein zweites Roll- oder Gleitmittel auf. Vorzugsweise sind diese Mittel auf zwei gegenüberliegenden Seiten des Werkzeugs und besonders bevorzugt jeweils im Bereich von dessen vorderem und hinterem Ende vorgesehen.

Vorzugsweise weist die Verpackungsmaschine eine erste Roll- oder Gleitfläche, beispielsweise die Oberfläche des Rahmens der Verpackungsmaschine und/oder die Oberfläche der Kettenführung, auf, entlang derer das Werkzeug verschiebbar ist. Vorzugsweise wirken dabei die ersten Roll- oder Gleitmittel mit der Roll- oder Gleitfläche zusammen. Weiterhin bevorzugt wirken die zweiten Roll- oder Gleitmittel mit der Führung zusammen.

Ein weiterer Gegenstand der vorliegenden Erfindung ist ein Verfahren zum Einführen eines Werkzeugs in ein Oberteil, wobei das Werkzeug zunächst entlang einer Roll- oder Gleitfläche, insbesondere horizontal, und anschließend entlang einer Führung verschoben wird, von der das Werkzeug im letzten Abschnitt angehoben wird.

Im Folgenden wird die Erfindung anhand der Figuren 1 - 6 erläutert. Diese Erläuterungen sind lediglich beispielhaft und schränken den allgemeinen Erfindungsgedanken nicht ein.
- **Figur 1**: zeigt die erfindungsgemäße Verpackungsmaschine
- **Figuren 2-5**: zeigen das Einführen des Werkzeugs in das Oberteil
- **Figur 6**: zeigt die Sicherung des Werkzeugs in dem Oberteil

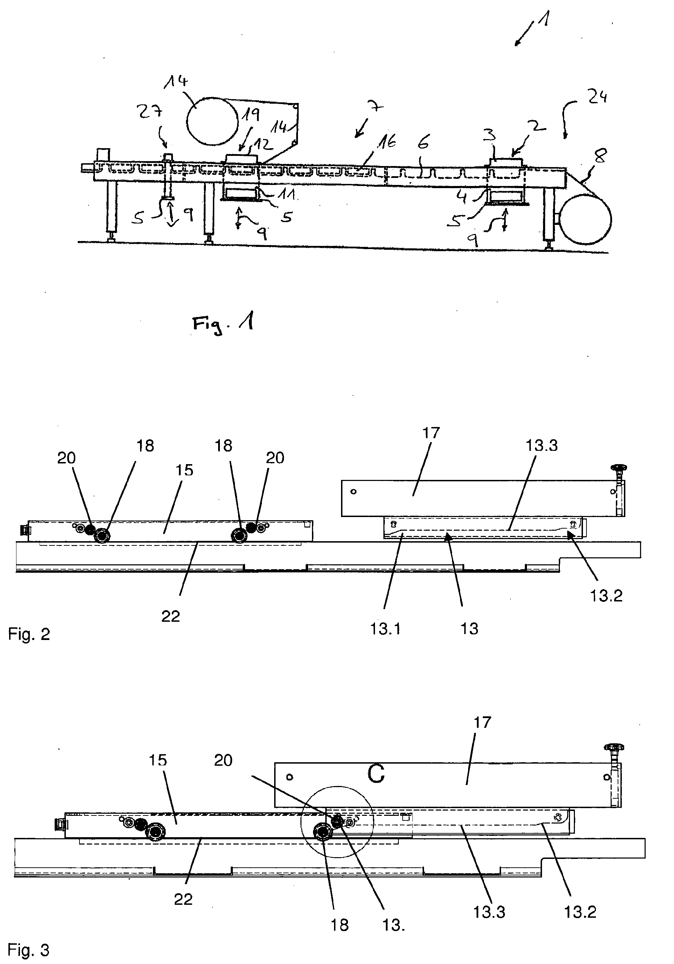

Figur 1 zeigt die erfindungsgemäße Verpackungsmaschine 1, die eine Tiefziehstation 2, eine Füllstation 7 sowie eine Siegelstation 19 aufweist. Eine Kunststofffolienbahn 8, die sogenannte Unterbahn, wird von einer Vorratsrolle abgezogen und, vorzugsweise taktweise, entlang der erfindungsgemäßen Verpackungsmaschine von rechts nach links transportiert. Bei einem Takt wird die Folienbahn um eine Formatlänge weitertransportiert. Dafür weist die Verpackungsmaschine zwei Transportmittel (nicht dargestellt), in dem vorliegenden Fall jeweils zwei Endlosketten auf, die rechts und links von der Folienbahn angeordnet sind. Jede Endloskette weist Haltemittel auf, die jeweils die Kanten der Folienbahn zusammenwirken. Sowohl am Anfang als auch am Ende der Verpackungsmaschine ist für jede Kette jeweils mindestens ein Zahnrad vorgesehen, um das die jeweilige Kette umgelenkt wird. Mindestens eines dieser Zahnräder ist angetrieben. Die Zahnräder im Eingangsbereich und/oder im Ausgangsbereich können miteinander, vorzugsweise durch eine starre Welle, verbunden sein. Jedes Transportmittel weist eine Vielzahl von Klemmmitteln auf, die die Unterfolie 8 im Einlaufbereich klemmend ergreifen und die Bewegung des Transportmittels auf die Unterfolie 8 übertragen. Im Auslaufbereich der Verpackungsmaschine wird die klemmende Verbindung zwischen dem Transportmittel und der Unterfolie wieder gelöst. In der Tiefziehstation 2, die über ein Oberwerkzeug 3 und ein Unterwerkzeug 4 verfügt, das die Form der herzustellenden Verpackungsmulde aufweist, werden die Verpackungsmulden 6 in die Folienbahn 8 eingeformt. Das Unterwerkzeug 4 ist auf einem Hubtisch 5 angeordnet, der, wie durch den Doppelpfeil symbolisiert wird, vertikal verstellbar ist. Vor jedem Folienvorschub wird das Unterwerkzeug 4 abgesenkt und danach wieder angehoben. Im weiteren Verlauf der Verpackungsmaschine werden die Verpackungsmulden dann in der Füllstation 7 mit dem Verpackungsgut 16 gefüllt. In der sich daran anschließenden Siegelstation 19, die ebenfalls aus einem Oberwerkzeug 12 und einem vertikal verstellbaren Unterwerkzeug 11 besteht, wird eine Oberfolie auf die Verpackungsmulde gesiegelt. Auch in der Siegelstation werden das Oberwerkzeug und/oder das Unterwerkzeug vor und nach jedem Folientransport abgesenkt bzw. angehoben. Auch die Oberfolie 14 kann in Transportmitteln geführt sein bzw. von Transportketten transportiert werden, wobei sich diese Transportmittel dann nur von der Siegelstation und ggf. stromabwärts erstrecken. Ansonsten gelten die Ausführungen, die zu dem Transportmitteln der Unterfolie gemacht wurden. Im weiteren Verlauf der Verpackungsmaschine werden auch die fertiggestellten Verpackungen vereinzelt, was mit dem Schneidwerkzeug 27 erfolgt. Das Schneidwerkzeug 27 ist in dem vorliegenden Fall ebenfalls mit einer Hubeinrichtung 9 anhebbar bzw. absenkbar.

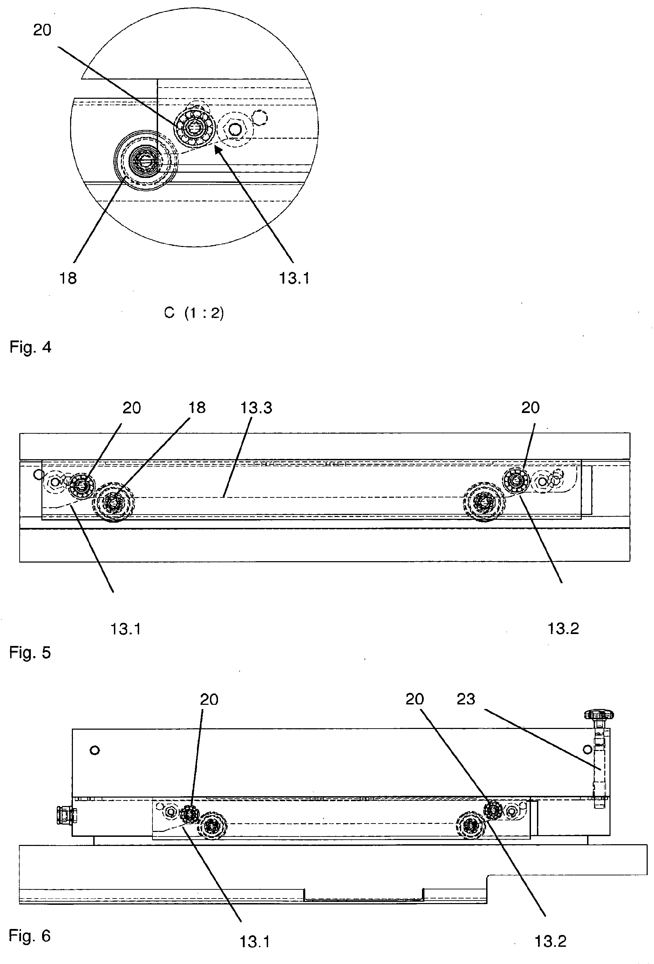

Figuren 2 - 5 zeigen das Einführen des Werkzeugs 15 in das Oberteil 17. Das Werkzeug 15 weist zwei erste Rollen 18 auf, mit denen es auf einer Roll- Gleitfläche 22, beispielweise der Oberfläche der Kettenführung aufliegt. Des Weiteren weist das Werkzeug zwei zweite Rollen 20 auf, die sich vorzugsweise oberhalb der ersten Rollen 18 befinden. Die linke zweite Rolle 20 ist dabei tiefer angeordnet als die rechte zweite Rolle 20. In dem vorliegenden Fall ist die Führung 13 in dem Oberteil 17 angeordnet und weist eine erste Steigung 13.1 und eine zweite Steigung 13.2 auf. Zwischen den Steigungen 13.1, 13.2 ist ein im Wesentlichen horizontaler Abschnitt 13.3 angeordnet. Zunächst wird das Werkzeug 15 mittels der ersten Rollen 18 entlang der Fläche 22 nach rechts verschoben, bis sich die rechte zweite Rolle 20 im Bereich der ersten Steigung 13.1 oder oberhalb des horizontalen Abschnitts befindet (vgl. Fig. 3 und 4). Dann rollt die rechte zweite Rolle 20 entlang des horizontalen Abschnitts 13.3 und die linke erste Rolle 18 weiter entlang der Fläche 22 bis sich die linke zweite Rolle 20 in den Bereich der ersten Steigung 13.1 gelangt. Gleichzeitig befindet sich dann die rechte zweite Rolle 20 im Bereich der zweiten Steigung 13.2 (vgl. Fig. 5). Bei einer weiteren Bewegung des Werkzeuges nach rechts, laufen die zweiten Rollen 20 entlang der ersten bzw. zweiten Steigung 13.1, 13.2 und das Werkzeug 15 wird angehoben, so dass nur ein minimaler oder gar kein Spalt zwischen dem Oberteil und der Oberfläche des Werkzeuges vorhanden ist (vgl. Fig.6). In dieser Position wird das Werkzeug durch ein Sicherungsmittel 23, beispielsweise einen Schnappverschluss, reversibel gesichert.

Gemäß einer alternativen Ausführungsform sind die zweiten Rollen 20 nicht fluchtend sondern seitlich versetzt zueinander vorgesehen, wobei die rechte, zweite Rolle 20 vorzugsweise weiter abstehend von dem Werkzeug vorgesehen ist, als die linke zweite Rolle 20 oder vorzugsweise umgekehrt. Bei diesem Beispiel sind die rechte und die linke zweite Rolle 20 auf derselben Höhe angeordnet. Dementsprechend ist die Führung 13 so gestaltet, dass die zweite Steigung 13.2 seitlich neben der ersten Steigung 13.1 und/oder dem horizontalen Abschnitt 13.3 angeordnet ist. Bei dieser Ausführungsform können die ersten Rollen 18 entfallen. Die zweiten Rollen 20 sind vorzugsweise so vorgesehen, dass sie auf der Fläche 22 abrollen und mit jeweils einer Steigung 13.1, 13.2 in rollenden/gleitenden Eingriff gebracht werden können.

Der Fachmann erkennt, dass sowohl die Rollen 18, 20, die Führung 13 und die Fläche 22 jeweils an gegenüberliebenden Seiten des Werkzeugs bzw. des Oberteils vorgesehen sind.

Der Fachmann erkennt des weiteren, dass die ersten und die zweiten Rollen 18, 20 zumindest teilweise durch entsprechende Gleitmittel ersetzt werden können.

Zur Demontage wird das Sicherungsmittel gelöst und das Werkzeug 15 nach links verschoben.

Durch die erfindungsgemäße Verpackungsmaschine bzw. das erfindungsgemäße Verfahren kann ein Werkzeugwechsel sehr schnell und/oder einfach erfolgen. Das Bedienpersonal muss das Werkzeug nicht anheben oder absenken.

### Bezugszeichenliste:

- 1: Verpackungsmaschine
- 2: Tiefziehstation
- 3: Oberwerkzeug der Tiefziehstation
- 4: Unterwerkzeug der Tiefziehstation
- 5: Hubtisch, Träger eines Werkzeugs der Siegel- , Tiefziehstation und/oder der Schneideinrichtung
- 6: Verpackungsmulde
- 7: Füllstation
- 8: Unterfolienbahn
- 9: Hubeinrichtung
- 10: Auflagemittel
- 11: Unterwerkzeug der Siegelstation
- 12: Oberwerkzeug der Siegelstation
- 13: Führung
- 13.1: erste Steigung
- 13.2: zweite Steigung
- 13.3: horizontaler Abschnitt
- 14: Oberfolie
- 15: Werkzeug
- 16: Verpackungsgut
- 17: Oberteil
- 18: Erste Roll- oder Gleitmittel
- 19: Siegelstation
- 20: Zweite Roll- oder Gleitmittel
- 21: Kniehebelsystem
- 22: Roll- oder Gleitfläche
- 23: Sicherungsmittel
- 24: Einlaufbereich
- 25: -
- 26: -
- 27: Schneideinrichtung

## Patentansprüche

1. Verpackungsmaschine (1) mit einer Tiefziehstation (2), einer Siegelstation (19) und/oder einer Schneideinrichtung (27), wobei mindestens eine dieser Stationen (2, 19) oder die Schneideinrichtung (27) ein Werkzeug (15) und ein Oberteil (17) aufweisen und das Werkzeug reversibel an dem Oberteil befestigbar ist, wobei das Werkzeug (15) oder das Oberteil eine Führung (13) aufweisen, entlang derer das Werkzeug (15) zunächst im Wesentlichen horizontal in das Oberteil (17) einführbar ist und die das Werkzeug (15) anschließend anhebt, **dadurch gekennzeichnet, dass** die Führung eine erste Steigung (13.1) und eine zweite Steigung (13.2) und dazwischenliegend einen horizontalen Abschnitt (13.3) aufweist, wobei die erste und die zweite Steigung fluchten oder versetzt vorgesehen ist.

2. Verpackungsmaschine nach Anspruch 1, **dadurch gekennzeichnet, dass** das Werkzeug (15) mindestens eine erstes Roll- oder Gleitmittel (18) und vorzugsweise mindestens ein zweites Roll- oder Gleitmittel (20) aufweist.

3. Verpackungsmaschine nach Anspruch 2, **dadurch gekennzeichnet, dass** sie eine erste Roll- oder Gleitfläche (22) aufweist, entlang derer das Werkzeug verschiebbar ist.

4. Verpackungsmaschine nach Anspruch 2 oder 3, **dadurch gekennzeichnet, dass** die ersten Roll- oder Gleitmittel (18) mit der Roll- oder Gleitfläche (22) zusammenwirken.

5. Verpackungsmaschine nach einem der Ansprüche 2 - 4, **dadurch gekennzeichnet, dass** die zweiten Roll- oder Gleitmittel (20) mit der Führung (13) zusammenwirken.

## Claims

1. Packaging machine (1) having a thermoforming station (2), a sealing station (19) and/or a cutting device (27), wherein at least one of these stations (2, 19) or the cutting device (27) has a tool (15) and an upper part (17) and the tool can be fastened in a reversible manner on the upper part, wherein the tool (15) or the upper part has a guide (13), along which the tool (15) can be introduced into the upper part (17) in the first instance essentially horizontally and which then raises the tool (15), **characterized in that** the guide has a first slope (13.1) and a second slope (13.2) and a horizontal portion (13.3) located therebetween, wherein the first and the second slopes are aligned or offset.

2. Packaging machine according to Claim 1, **characterized in that** the tool (15) has at least one first rolling or sliding means (18) and preferably at least one second rolling or sliding means (20).

3. Packaging machine according to Claim 2, **characterized in that** it has a first rolling or sliding surface (22), along which the tool can be displaced.

4. Packaging machine according to Claim 2 or 3, **characterized in that** the first rolling or sliding means (18) interact with the rolling or sliding surface (22).

5. Packaging machine according to one of Claims 2-4, **characterized in that** the second rolling or sliding means (20) interact with the guide (13).

## Revendications

1. Machine d'emballage (1) comprenant un poste d'emboutissage profond (2), un poste de scellement (19) et/ou un dispositif de coupe (27), au moins l'un de ces postes (2, 19) ou le dispositif de coupe (27) présentant un outil (15) et une partie supérieure (17) et l'outil pouvant être fixé de manière réversible à la partie supérieure, l'outil (15) ou la partie supérieure présentant un guide (13) le long duquel l'outil (15) peut être introduit tout d'abord essentiellement horizontalement dans la partie supérieure (17) et qui soulève ensuite l'outil (15), **caractérisée en ce que** le guide présente une première pente (13.1) et une deuxième pente (13.2) et entre elles une section horizontale (13.3), la première et la deuxième pente étant alignées ou décalées l'une par rapport à l'autre.

2. Machine d'emballage selon la revendication 1, **caractérisée en ce que** l'outil (15) présente au moins un premier moyen de roulement ou de glissement (18) et de préférence au moins un deuxième moyen de roulement ou de glissement (20).

3. Machine d'emballage selon la revendication 2, **caractérisée en ce qu'**elle présente une première surface de roulement ou de glissement (22) le long de laquelle l'outil peut être déplacé.

4. Machine d'emballage selon la revendication 2 ou 3, **caractérisée en ce que** les premiers moyens de roulement ou de glissement (18) coopèrent avec la surface de roulement ou de glissement (22).

5. Machine d'emballage selon l'une quelconque des revendications 2 à 4, **caractérisée en ce que** les deuxièmes moyens de roulement ou de glissement (20) coopèrent avec le guide (13).
